# EUROPEAN PATENT SPECIFICATION

(11) **EP 4 488 573 B1**
(45) Date of publication and mention of the grant of the patent: **11.02.2026**
(21) Application number: 24000082.8
(22) Date of filing: 26.06.2024
(51) Int. Cl.: F21V 21/15, B63B 45/04, F21V 21/22, F16H 25/20, F21V 15/01, F21W 107/20

(54) **LIGHT SIGNALLING DEVICE FOR THE BOW OF A SHIP**
SIGNALLICHTANLAGE FÜR SCHIFFSBUG
DISPOSITIF DE SIGNALISATION LUMINEUSE DE PROUE DE NAVIRE

(30) Priority: 30.06.2023 IT 202300013737
(43) Date of publication of application: 08.01.2025
(73) Proprietor: SETEC S.p.A., 10122 Torino (TO) (IT)
(72) Inventor: Seminatore, Fabio, I-10122 Torino (TO) (IT)
(74) Representative: Aprà, Mario

(56) References cited:
- EP-A1- 3 321 164
- WO-A1-2013/131844
- DE-U1- 202008 008 144
- US-A- 5 937 699
- US-A1- 2002 104 395
- US-A1- 2015 075 306

## Description

The present invention concerns a light signalling device for the bow of a ship.

A known light signalling device for the bow of a ship comprises a rod-shaped vertical support with telescopic components and a light signalling means at the top of said vertical support. Said known vertical support is proportional in height to the length of the ship and, for example, for a ship or yacht 50 m in length, it can reach a height ranging from 8 to 10 m.

Said known vertical support comprises means for controlling the extension/retraction of the telescopic components.

In particular, the document EP3321164 A1 discloses a light signalling device for the bow of a ship, which comprises a rod-shaped vertical support with telescopic components, contained, when at rest, in an external tubular sleeve fixed to the structure of the ship. Means for controlling the extension/retraction of the telescopic components comprise a plurality of externally threaded vertical rods, called operating screws, coaxial to one another, with respective lead screw means connected with corresponding telescopically sliding reciprocally connected tubular components. Electric gear motor means, rotating in the two directions of rotation, are kinematically connected to a first operating screw, which imparts motion to the other operating screws.

The aforesaid known light signalling device for the bow of a ship has a safe operation, but is structurally complex and has a significantly high technical and economic cost.

An object of the present invention is to provide a light signalling device for the bow of a ship, which has a safe operation and a limited technical and economic cost.

Another object of the invention is to provide a signalling device as specified which has a simplified structure.

In view of these objects, the present invention provides a light signalling device for the bow of a ship, the essential features of which form the subject matter of claim 1.

Other advantageous features form the subject matter of the dependent claims.

Further features and advantages of the invention will be more apparent from the detailed description below of an example of embodiment of the device according to the invention, with reference to the accompanying drawing, which shows important details for the invention, and from the claims.

The features illustrated here must not necessarily be understood as being to scale and are represented so that the characteristics according to the invention are clearly highlighted.

In the drawing:
- Fig. 1 is an elevation view of the light signalling device for the bow of a ship according to an example of embodiment of the invention, comprising an external tubular sleeve and a plurality of tubular sections (three in the example illustrated), coupled to slide telescopically into one another, wherein said tubular sections are telescopically retracted inside said external tubular sleeve (it is specified that in said figure the light signalling means is not illustrated);
- Fig. 2 is a sectional view along the line II-II of Fig. 1:
- Fig. 3 is a sectional view along the line III-III of Fig. 2;
- Fig. 4 and Fig. 5 are views similar to that of Fig. 3, but in a different scale and illustrating different steps of telescopic deployment of said tubular sections with respect to one another and with respect to said external tubular sleeve (it is specified that the light signalling means is illustrated in said figures);
- Fig. 6 is a view similar to that of Fig. 1, but in a different scale and illustrating the device completely deployed, in which in the signalling means is in the condition of maximum visibility with respect to the bow of a ship on which it is installed;

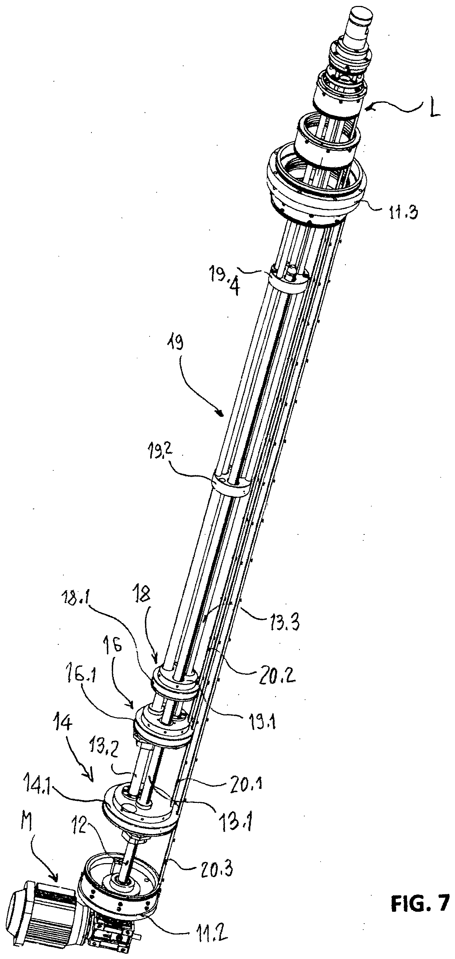

- Fig. 7 is a view similar to that of Fig. 4, but illustrated in a different scale and in a perspective view, wherein for simplicity said tubular sections and said external tubular sleeve are not illustrated:
- Fig. 8 is a perspective and detail view of a component of the internal structure of the device according to the example of embodiment illustrated;

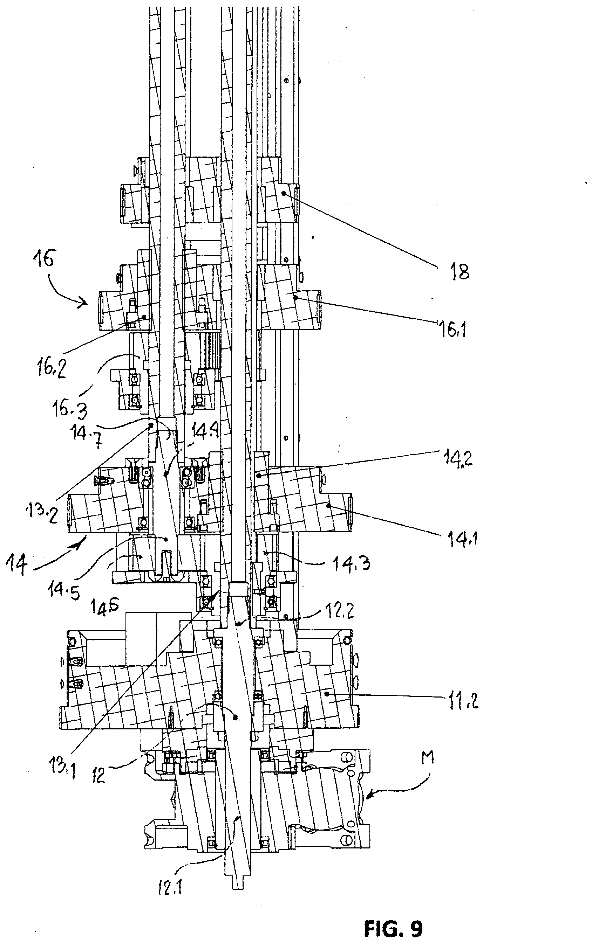

- Fig. 9 is a detail view, on a larger scale, of the lower part of the device of Fig. 4, wherein for simplicity said tubular sections and said external tubular sleeve are not illustrated;
- Fig. 10 is a view similar to that of Fig. 9, but in which the section is taken according to a different vertical plane and the motor means, present in Fig. 9, are not illustrated.

With reference to the drawing, the reference number 10 indicates as a whole the light signalling device for the bow of a ship according to the invention. Said device 10 comprises a light signalling means L, which is supported fixed at the top of said device. The relative electrical circuit means for supplying and controlling the light signalling means L, known per se, are not illustrated for simplicity.

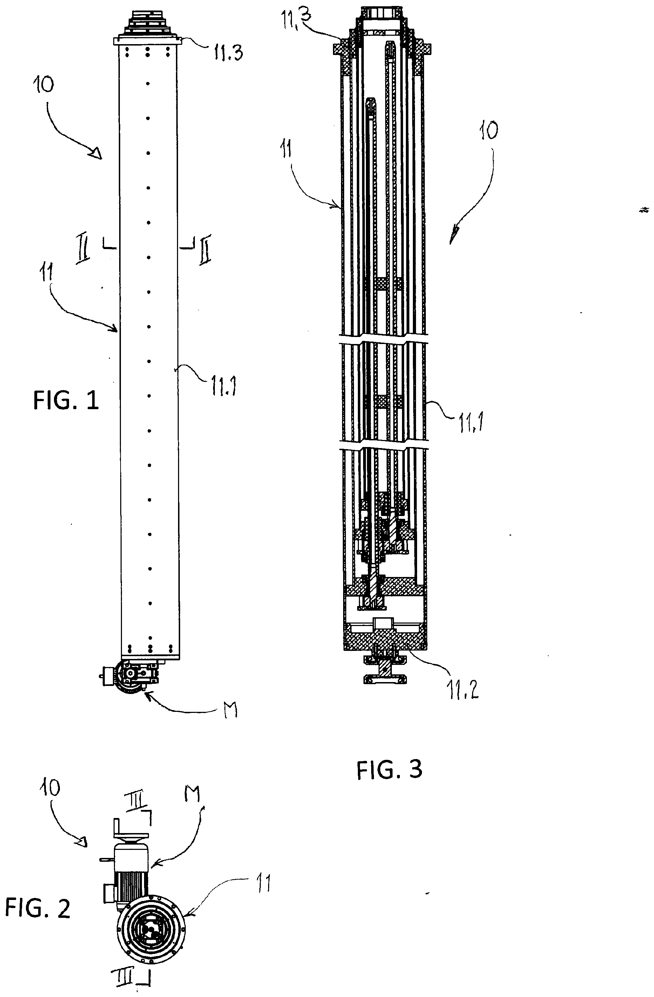

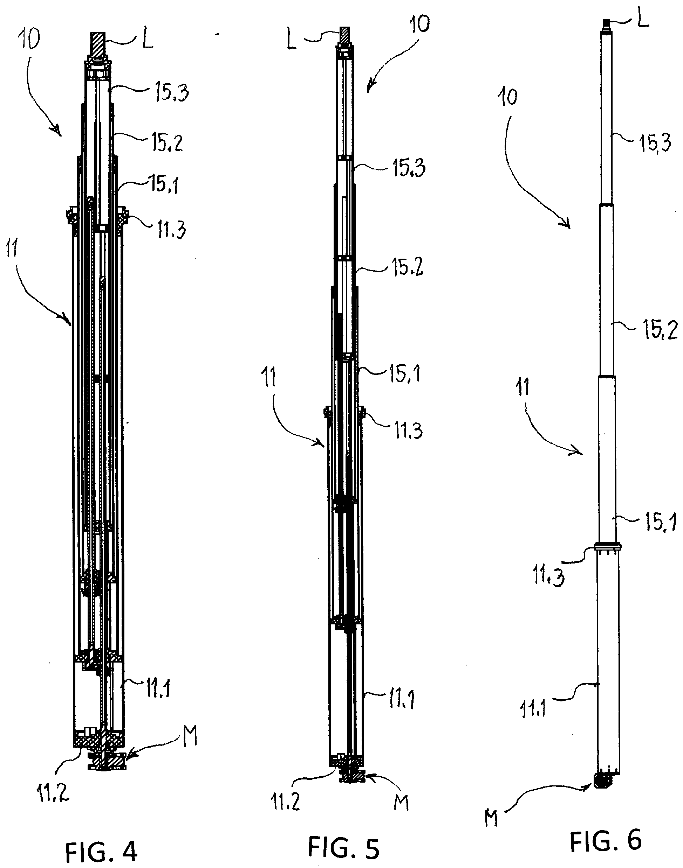

The device 10 comprises an external supporting structure 11 of said light signalling means L. The structure 11 comprises a fixed rigid tubular sleeve 11.1 and a plurality (three in this example) of tubular sections 15.1, 15.2, 15.3, which are respectively coupled to slide telescopically into one another and with respect to said external sleeve 11.1, so as to selectively take a first operating arrangement with minimum overall dimensions (Fig. 1), in which said tubular sections 15.1, 15.2, 15.3 are telescopically retracted inside said external tubular sleeve 11.1, and a second operating arrangement (Fig. 6), in which said tubular sections 15.1, 15.2, 15.3 are telescopically extended with respect to one another and to said external tubular sleeve 11.1 and the signalling means L is in the condition of maximum visibility with respect to the bow of the ship (not illustrated) on which the device 10 is mounted.

For reasons of clarity, the structural description below is provided with reference to the device 10 configured in said first operating arrangement.

In particular, said external rigid external tubular sleeve 11.1 is, for example, made of aluminium, and is fixed with respect to a part of fixed structure of the ship (not illustrated), for example under a bridge. Said external tubular sleeve 11.1 is integral with respect to a stationary internal base support plate 11.2 of the device 10, for example made of aluminium, which is disc shaped and is provided with a through hole. Said external tubular sleeve 11.1 surrounds, with a lower end area thereof, said base support plate 11.2 and has at the top a rigid collar 11.3, which is fixed to said part of fixed structure of the ship.

Said base support plate 11.2 supports a first rotating shaft 12, the axis of which is oriented along the direction of telescopic extension/retraction of said tubular sections 15.1, 15.2, 15.3. For reasons that will be evident below, said first shaft 12 is also called drive shaft and has a first axial end 12.1 extending below said base support plate 11.2, through said through hole. Said lower axial end 12.1 of the drive shaft 12 is rigidly connected to a coaxial helical toothed wheel, which meshes with a reduction means, coaxial with respect to the output shaft of electric motor means M, provided with a brake. Said electric motor means M are supported by means of said base support plate 11.2, and the axis of said output shaft is orthogonal to the axis of said drive shaft 12. Said electric motor means M are configured to rotate in the two directions of rotation.

Said drive shaft 12 has a second axial end 12.2 extending above said base plate 11.2 and rigidly connected to one end of a first coaxial externally threaded operating screw 13.1, with thread Tpn, extending for a substantial part of said structure 11. Said first operating screw 13.1 has a longitudinal key groove extending for the whole of its length.

First translating plate supporting means 14 are provided movable with respect to said first operating screw 13.1, above said base support plate 11.2. Said first movable supporting means 14 comprise:
- a first supporting plate 14.1, for example made of aluminium, arranged inside said external sleeve 11.1 and which comprises, in a through hole, a first lead screw 14.2 integral and engaged by helical coupling with respect to said first operating screw 13.1;
- a first pinion 14.3 fitted on said first operating screw 13.1, below said first lead screw 14.2, which is provided integral in rotation and axially sliding with respect to said first operating screw 13.1, by means of connection key means, provided sliding in said longitudinal groove of said first operating screw 13.1;
- a second shaft 14.4, hereinafter also first driven shaft, supported rotatably, arranged laterally and with axis parallel with respect to the axis of said drive shaft 12, in a corresponding through hole of said first supporting plate 14.1, wherein:
- said first driven shaft 14.4 has a first axial end 14.5 extending below said first supporting plate 14.1 and rigidly connected to a second pinion 14.6, coaxial to said shaft and meshing with said first pinion 14.3, from which it receives its rotation motion;
- a first telescopic tubular section 15.1, fixed with a lower end area close to the edge of said first supporting plate 14.1 inside said tubular sleeve 11.1 and extending for a substantial part of the height of said tubular sleeve.

Said first driven shaft 14.4 has a second axial end 14.7 extending above said first supporting plate 14.1 and rigidly connected to one end of a second externally threaded coaxial operating screw 13.2, with a thread extending for a substantial part of said tubular sleeve 11.1. Said second operating screw 13.2 has a longitudinal key groove extending substantially for the whole of its length.

Second translating plate supporting means 16 are provided movable with respect to said second operating screw 13.2, above said first supporting plate 14.1. Said second movable supporting means 16 comprise:
- a second supporting plate 16.1, for example made of aluminium, arranged inside said external sleeve 11.1 and which comprises, in a through hole, a second lead screw 16.2 integral with said second plate 16.1 and engaged by helical coupling with respect to said second operating screw 13.2;
- a third pinion 16.3, provided below said second lead screw 16.2, integral in rotation and axially sliding with respect to said second operating screw 13.2, by means of connection key means, provided sliding in said longitudinal groove of said second operating screw 13.2;

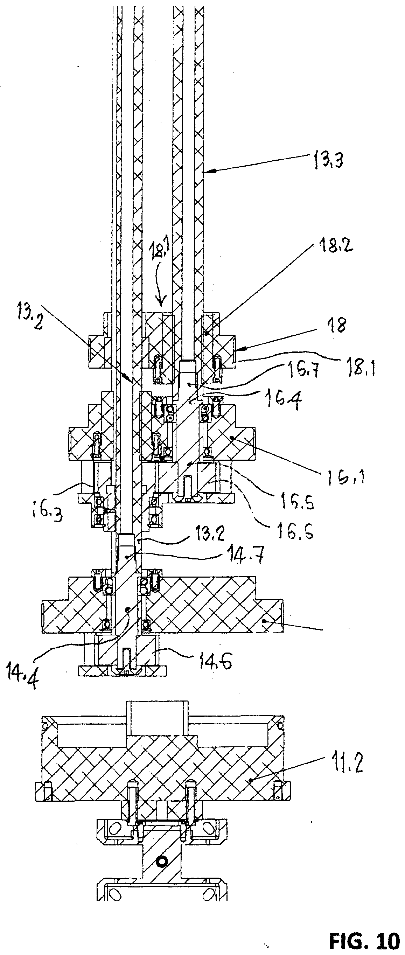

- a third shaft 16.4 (Fig. 10), hereinafter also second driven shaft; supported rotatably, arranged laterally with respect to said first driven shaft 14.4 and with axis parallel with respect to the axis of said drive shaft 12, in a corresponding through hole of said second supporting plate 16.1, wherein:
- said second driven shaft 16.4 has a first axial end 16.5 extending below said second supporting plate 16.1 and rigidly connected to a fourth pinion 16.6, coaxial to said shaft and meshing with said third pinion 16.3, from which it receives its rotation motion;
- a second telescopic tubular section 15.2, fixed with a lower end area close to the edge of said second supporting plate 16.1 inside said tubular sleeve 11.1 extending for a substantial part of the height of said tubular sleeve 11.1.

Said second driven shaft 16.4 has a second axial end 16.7 extending above said second supporting plate 16.1 and rigidly connected to one end of a third externally threaded coaxial operating screw 13.3, with a thread extending for a substantial part of said tubular sleeve 11.1. Said third operating screw 13.3 has a longitudinal key groove extending substantially for the whole of its length.

Third translating plate supporting means 18 are provided movable with respect to said third operating screw 13.3, above said second supporting plate 16.1. Said third movable supporting means 18 comprise:
- a third supporting plate 18.1, for example made of aluminium, arranged inside said external sleeve 11.1 and which comprises a third lead screw 18.2 integral with said third plate 18.1 and engaged by helical coupling with respect to said third operating screw 13.3;
- a third telescopic tubular section 15.3, fixed with a lower end area close to the edge of said third supporting plate 18.1 inside said tubular sleeve 11.1.

It is specified that:
- said first operating screw 13.1 extends freely through respective through holes of said second supporting plate 16.1 and of said third supporting plate 18.1, in which respective fixed guide and centring bushings are provided;
- said second operating screw 13.2 extends freely through respective through a through hole of said third supporting plate 18.1, in which a corresponding fixed guide and centring bushing is provided.

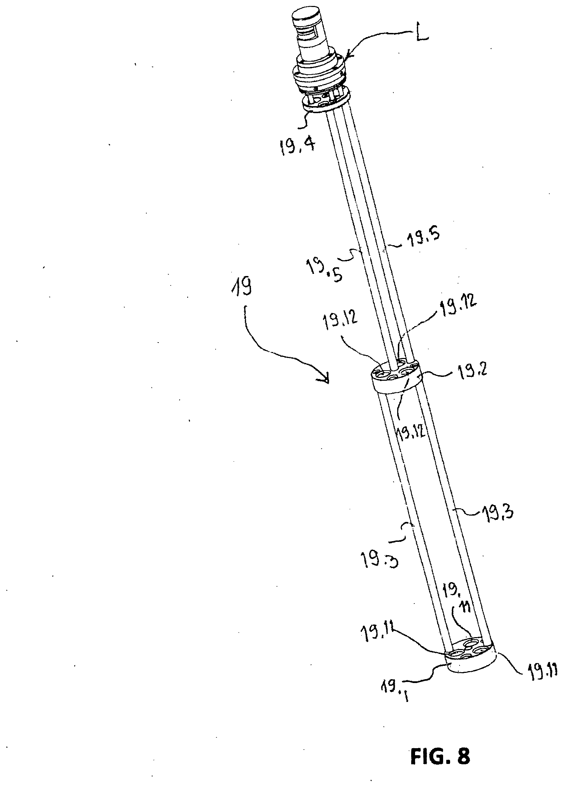

Moreover, with reference also to Fig. 8, the reference number 19 indicates a pedestal means that supports at the top said light signalling means L. Said pedestal means 19 is contained, at least in part, in said external tubular sleeve 11.1, above said third translating plate supporting means 18.

In particular, said pedestal means 19 comprises:
- a first disc plate 19.1, for example made of anti-friction material, fixed above said third supporting plate 18.1 and contained within the overall dimensions of said third plate 18.1;
- a second disc plate 19.2, for example made of anti-friction material, supported fixed above said first plate 19.1 by means of two first rectilinear rigid rods 19.3, aligned along the direction of extension and retraction of said telescopic tubular sections 15.1, 15.2, 15.3; said second disc plate 19.2 has the same shape as said first plate 19.1;
- three through holes provided in said first disc plate 19.1, in which respective guide and centring bushings 19.11 are fixed, each corresponding to a respective of said three operating screws 13.1, 13.2, 13.3, which is guided and centred by means of said bushing;
- three through holes provided in said second disc plate 19.2, in which respective guide and centring bushings 19.12 are fixed, each corresponding to a respective of said three operating screws 13.1, 13.2, 13.3, which is guided and centred by means of said bushing;
- a third disc plate 19.4, for example made of aluminium, supported fixed above said second plate 19.2 by means of two second rectilinear rigid rods 19.5, aligned along the direction of extension and retraction of said telescopic tubular sections 15.1, 15.2, 15.3; said third disc plate 19.4 has the same shape as said first plate 19.1, wherein said third disc plate 19.4 supports said light signalling means L.

By means of the aforesaid arrangement, said three operating screws 13.1, 13.2, 13.3 are guided and centred during the steps of telescopic extension and retraction of the telescopic tubular sections 15.1, 15.2, 15.3 and the containment of each operating screw in radial direction with respect to the adjacent operating screws and with respect to the tubular sleeve 11.1 is ensured.

It is also specified that said three operating screws 13.1, 13.2, 13.3 have the respective axes staggered from one another in a plane orthogonal to the axis of said drive shaft 12 (Fig. 2).

The directions of rotation of adjacent operating screws 13.1, 13.2, 13.3 are discordant with one another.

Moreover, said first supporting plate 14.1, said second supporting plate 16.1 and said base support plate 11.2 are rigidly connected with respective rectilinear rigid slats 20.1, 20.2, 20.3, for example made of aluminium, and extending along the direction of extension and retraction of said telescopic tubular sections 15.1., 15.2, 15.3.

Said rectilinear-rigid slats 20.1, 20.2, 20.3 are engaged in corresponding rectilinear grooves (not visible in the drawing), provided respectively on the inner face of said three telescopic tubular sections 15.1, 15.2, 15.3, with the function of preventing said three telescopic tubular sections 15.1, 15.2, 15.3 from rotating about their axis during extension and retraction, when telescopically extended.

### Operation

Considering the device 10 in its first operating arrangement with minimum overall dimensions, in which said tubular sections 15.1, 15.2, 15.3 are telescopically retracted inside said external tubular sleeve 11.1 (Fig. 1), when wishing to use the light signalling device 10, the electric motor means M are rotated in a first direction of rotation.

The torque applied rotates the drive shaft 12 in one direction and, with it, the first operating screw 13.1. By rotating, said first operating screw 13.1, through helical coupling rotates said first lead screw 14.2 in longitudinal direction, with upward sliding of the key in the corresponding groove together with said first supporting plate 14.1, while the first pinion 14.3 rotates the second pinion 14.6.

Rotation of the second pinion 14.6 rotates the first driven shaft 14.4 and with it said second operating screw 13.2, which by rotating, through helical coupling rotates said second lead screw 16.2 in longitudinal direction, with upward sliding of the key in the corresponding groove together with said second supporting plate 16.1; the third pinion 16.3 also rotates, integral in rotation with respect to the second driven shaft 16.4. and meshing with the fourth pinion 16.6.

The second driven shaft 16.4 rotates integral with the third operating screw 13.3, which, by rotating, through helical coupling rotates said third lead screw 18.2 in longitudinal direction, with upward sliding of the key in the corresponding groove together with said third supporting plate 18.1.

The first supporting plate 14.1, the second supporting plate 16.1 and the third supporting plate 18.1 simultaneously translate upwards, while the corresponding lead screws 14.2, 16.2, 18.2 are driven upwards.

Correspondingly, the tubular sections 15.1, 15.2, 15.3 are driven by the corresponding supporting plates, 14.1, 16.1, 18.1, which are respectively integral, to extend telescopically upwards, until reaching said second operating arrangement, in which the external supporting structure 11 of said light signalling means L is fully deployed (Fig. 6).

Reciprocally, by means of an inverse rotation of the electric motor means M, the telescopic movement of the tubular sections 15.1, 15.2, 15.3 is reversed, until they completely retract telescopically inside said external tubular sleeve 11.1 (Fig. 1).

As is apparent from the above, the present invention achieves the objects set forth in the introduction of this description, in a simple and efficient way.

## Claims

1. Light signalling device (10) for the bow of a ship, comprising a light signalling means (L) and a supporting structure (11) of said light signalling means (L), wherein:
- said structure (11) comprises a fixed rigid tubular sleeve (11.1) and a plurality of tubular sections (15.1, 15.2, 15.3), which are coupled to slide telescopically into one another and with respect to said sleeve (11.1),
so as to selectively take a first operating arrangement with minimum overall dimensions, in which said tubular sections (15.1, 15.2, 15.3) are telescopically retracted inside said sleeve (11.1), and a second operating arrangement, in which said tubular sections (15.1, 15.2, 15.3) are telescopically extended with respect to one another and to said sleeve (11.1) and the signalling means (L) is in the condition of maximum visibility with respect to the bow of the ship on which the device (10) is mounted,
and wherein:
- said sleeve (11.1) is integral with respect to a stationary internal base support plate (11.2), which is provided with a through hole;
- said base support plate (11.2) supports a first rotating shaft (12), hereinafter drive shaft, the axis of which is oriented along the direction of telescopic extension/retraction of said tubular sections (15.1, 15.2, 15.3);
- said drive shaft (12) has a first axial end (12.1) extending below said base support plate (11.2), through said through hole, connected to a toothed wheel, which meshes with a reduction means, connected with respect to the output shaft of electric motor means (M);
- said electric motor means (M) are supported by means of said base support plate (11.2) and are configured to rotate in the two directions of rotation;
- said drive shaft (12) has a second axial end (12.2) extending above said base plate (11.2) and rigidly connected to one end of a first externally threaded coaxial operating screw (13.1), extending for a substantial part of said structure (11);
- said first operating screw (13.1) has a longitudinal key groove extending for at least part of its length;
the device further comprising:
- first translating plate supporting means (14) provided movable with respect to said first operating screw (13.1), above said base support plate (11.2), which comprise:
- a first supporting plate (14.1), arranged inside said sleeve (11.1) and which comprises, in a through hole, a first lead screw (14.2) integral with said first plate (14.1) and engaged by helical coupling with respect to said first operating screw (13.1);
- a first pinion (14.3) fitted on said first operating screw (13.1), below said first lead screw (14.2), which is provided integral in rotation and axially sliding with respect to said first operating screw (13.1), by means of connection key means, provided sliding in said longitudinal groove of said first operating screw (13.1);
- a second shaft (14.4), hereinafter first driven shaft, supported rotatably, arranged laterally and with axis parallel with respect to the axis of said drive shaft (12), in a corresponding through hole of said first supporting plate (14.1), wherein said first driven shaft (14.4) has:
- a first axial end (14.5) extending below said first supporting plate (14.1) and rigidly connected to a second pinion (14.6), coaxial to said shaft and meshing with said first pinion (14.3), from which it receives its rotation motion;
- a second axial end (14.7) extending above said first supporting plate (14.1) and rigidly connected to one end of a second externally threaded coaxial operating screw (13.2), extending for a substantial part of said sleeve (11.1), when said tubular sections (15.1, 15.2, 15.3) are in said first operating arrangement;
- a first telescopic tubular section (15.1), fixed with a lower end area with respect to said first supporting plate (14.1) inside said sleeve (11.1) and extending for a substantial part of the height of said sleeve when said tubular sections (15.1, 15.2, 15.3) are in said first operating arrangement;
- said second operating screw (13.2) having a longitudinal key groove extending for at least part of its length; and
- at least second translating plate supporting means (16) provided movable with respect to said second operating screw (13.2), above said first supporting plate (14.1), which comprise:
- a second supporting plate (16.1), arranged inside said sleeve (11.1) and which comprises, in a through hole, a second lead screw (16.2) integral with said second plate (16.1) and engaged by helical coupling with respect to said second operating screw (13.2);
- a third pinion (16.3), provided below said second lead screw (16.2), integral in rotation and axially sliding with respect to said second operating screw (13.2), by means of connection key means, provided sliding in said longitudinal groove of said second operating screw (13.2);
- a third shaft (16.4), hereinafter second driven shaft; supported rotatably, arranged laterally with respect to said first driven shaft (14.4) and with axis parallel with respect to the axis of said drive shaft (12), in a corresponding through hole of said second supporting plate (16.1), wherein:
- said second driven shaft (16.4) has a first axial end (16.5) extending below said second supporting plate (16.1) and rigidly connected to a fourth pinion (16.6), coaxial to said shaft and meshing with said third pinion (16.3), from which it receives its rotation motion;
- a second telescopic tubular section (15.2), fixed with a lower end area with respect to said second supporting plate (16.1) inside said sleeve (11.1) and extending for a substantial part of the height of said sleeve (11.1), when said tubular sections (15.1, 15.2, 15.3) are in said first operating arrangement.

2. Device (10) according to claim 1, **characterized in that** said second driven shaft (16.4) has a second axial end (16.7) extending above said second supporting plate (16.1) and rigidly connected to one end of a third externally threaded coaxial operating screw (13.3), extending for a substantial part of said sleeve (11.1), when said tubular sections (15.1, 15.2, 15.3) are in said first operating arrangement, and which has a longitudinal key groove extending for at least a part of its length;
and **in that** third translating plate supporting means (18) are provided movable with respect to said third operating screw (13.3), above said second supporting plate (16.1) and comprise:
- a third supporting plate (18.1), arranged inside said sleeve (11.1) and which comprises a third lead screw (18.2) integral with said third plate (18.1) and engaged by helical coupling with respect to said third operating screw (13.3);
- a third telescopic tubular section (15.3), fixed with a lower end area with respect to said third supporting plate (18.1) inside said sleeve (11.1).

3. Device (10) according to claim 2, **characterized in that**:
- said first operating screw (13.1) extends freely through respective through holes of said second supporting plate (16.1) and of said third supporting plate (18.1), in which respective fixed guide and centring bushings are provided;
- said second operating screw (13.2) extends freely through a through hole of said third supporting plate (18.1), in which a corresponding fixed guide and centring bushing is provided;
**in that** it comprises a pedestal means (19) that supports at the top said light signalling means (L) and is fixed above said third translating plate supporting means (18),
and **in that** said pedestal means (19) comprises:
- a first plate (19.1), fixed above said third supporting plate (18.1) and contained within the overall dimensions of said third plate (18.1);
- a second plate (19.2), supported fixed above said first plate (19.1) by means of two first rectilinear rigid rods (19.3), aligned along the direction of extension and retraction of said telescopic tubular sections (15.1., 15.2, 15.3);
- three through holes provided in said first plate (19.1), in which respective guide and centring bushings (19.11) are fixed, each corresponding to a respective of said three operating screws (13.1, 13.2, 13.3), which is guided and centred by means of said bushing;
- three through holes provided in said second plate (19.2), in which respective guide and centring bushings (19.12) are fixed, each corresponding to a respective of said three operating screws (13.1, 13.2, 13.3), which is guided and centred by means of said bushing;
- a third plate (19.4), supported fixed above said second plate (19.2) by means of two second rectilinear rigid rods (19.5), aligned along the direction of extension and retraction of said telescopic tubular sections (15.1, 15.2, 15.3); wherein said third plate (19.4) supports said light signalling means (L).

4. Device (10) according to one or more of the preceding claims, **characterized in that** said three operating screws (13.1, 13.2, 13.3) have the respective axes staggered from one another in a plane orthogonal to the axis of said drive shaft (12).

5. Device (10) according to one or more of the preceding claims, **characterized in that** said first supporting plate (14.1), said second supporting plate (16.1) and said base support plate (11.2) are rigidly connected with respective rectilinear slats (20.1, 20.2, 20.3), extending along the direction of extension and retraction of said telescopic tubular sections (15.1, 15.2, 15.3), and **in that** said rectilinear rigid slats (20.1, 20.2, 20.3) are engaged in corresponding rectilinear grooves, provided respectively on the inner face of said three telescopic tubular sections (15.1, 15.2, 15.3), with the function of preventing said three telescopic tubular sections (15.1, 15.2, 15.3) from rotating about their axis during extension and retraction, when telescopically extended.

## Patentansprüche

1. Lichtsignaleinrichtung (10) für den Bug eines Schiffes, umfassend ein Lichtsignalmittel (L) und eine Trägerstruktur (11) des genannten Lichtsignalmittels (L), wobei:
- die genannte Struktur (11) eine feste starre Rohrhülse (11.1) und eine Mehrzahl von Rohrabschnitten (15.1, 15.2, 15.3) umfasst, die dazu gekoppelt sind, teleskopisch ineinander und relativ zu der genannten Hülse (11.1) zu gleiten,
so dass wahlweise eine erste Betriebsanordnung mit minimalen Gesamtabmessungen eingenommen wird, in der die genannten Rohrabschnitte (15.1, 15.2, 15.3) teleskopisch innerhalb der genannten Hülse (11.1) eingefahren sind, und eine zweite Betriebsanordnung, in der die genannten Rohrabschnitte (15.1, 15.2, 15.3) teleskopisch relativ zueinander und relativ zu der genannten Hülse (11.1) ausgefahren sind und das Lichtsignalmittel (L) sich in einer Stellung maximaler Sichtbarkeit relativ zum Bug des Schiffes befindet, an dem die Einrichtung (10) montiert ist,
und wobei:
- die genannte Hülse (11.1) integral mit einer stationären inneren Basisträgerplatte (11.2) ausgebildet ist, die mit einer Durchgangsöffnung versehen ist;
- die genannte Basisträgerplatte (11.2) eine erste rotierende Welle (12), nachfolgend Antriebswelle genannt, trägt, deren Achse entlang der Richtung der teleskopischen Aus- und Einfahrbewegung der genannten Rohrabschnitte (15.1, 15.2, 15.3) orientiert ist;
- die genannte Antriebswelle (12) ein erstes axiales Ende (12.1) aufweist, das sich unterhalb der genannten Basisträgerplatte (11.2) durch die genannte Durchgangsöffnung erstreckt und mit einem Zahnrad verbunden ist, das mit einem Untersetzungsgetriebe kämmt, welches mit der Abtriebswelle von elektrischen Motorantriebsmitteln (M) verbunden ist;
- die genannten elektrischen Motorantriebsmittel (M) mittels der genannten Basisträgerplatte (11.2) getragen sind und dazu ausgebildet sind, in zwei Drehrichtungen zu rotieren;
- die genannte Antriebswelle (12) ein zweites axiales Ende (12.2) aufweist, das sich oberhalb der genannten Basisträgerplatte (11.2) erstreckt und starr mit einem Ende einer ersten koaxialen, außen mit Gewinde versehenen Betätigungsschraube (13.1) verbunden ist, die sich über einen wesentlichen Teil der genannten Struktur (11) erstreckt;
- die genannte erste Betätigungsschraube (13.1) eine Längsnut für eine Passfeder über zumindest einen Teil ihrer Länge aufweist;
die Vorrichtung ferner umfassend:
- erste translatorische Platten-Trägermittel (14), die relativ zu der genannten ersten Betätigungsschraube (13.1) oberhalb der genannten Basisträgerplatte (11.2) beweglich vorgesehen sind und umfassen:
- eine erste Trägerplatte (14.1), die innerhalb der genannten Hülse (11.1) angeordnet ist und in einer Durchgangsöffnung eine erste Leitspindel (14.2) umfasst, die integral mit der genannten ersten Trägerplatte (14.1) ausgebildet ist und über eine Schraubenkopplung mit der genannten ersten Betätigungsschraube (13.1) in Eingriff steht;
- ein erstes Ritzel (14.3), das auf der genannten ersten Betätigungsschraube (13.1) unterhalb der genannten ersten Leitspindel (14.2) montiert ist und rotationsfest sowie axial verschieblich relativ zu der genannten ersten Betätigungsschraube (13.1) mittels Passfeder-Verbindungsmitteln vorgesehen ist, die in der genannten Längsnut der genannten ersten Betätigungsschraube (13.1) gleiten;
- eine zweite Welle (14.4), nachfolgend erste angetriebene Welle genannt, die drehbar gelagert ist, seitlich angeordnet ist und eine zur Achse der genannten Antriebswelle (12) parallele Achse aufweist, in einer entsprechenden Durchgangsöffnung der genannten ersten Trägerplatte (14.1), wobei die genannte erste angetriebene Welle (14.4) aufweist:
- ein erstes axiales Ende (14.5), das sich unterhalb der genannten ersten Trägerplatte (14.1) erstreckt und starr mit einem zweiten Ritzel (14.6) verbunden ist, das koaxial zu der genannten Welle angeordnet ist und mit dem genannten ersten Ritzel (14.3) kämmt, von dem es seine Drehbewegung erhält;
- ein zweites axiales Ende (14.7), das sich oberhalb der genannten ersten Trägerplatte (14.1) erstreckt und starr mit einem Ende einer zweiten koaxialen, außen mit Gewinde versehenen Betätigungsschraube (13.2) verbunden ist, die sich über einen wesentlichen Teil der genannten Hülse (11.1) erstreckt, wenn sich die genannten Rohrabschnitte (15.1, 15.2, 15.3) in der genannten ersten Betriebsanordnung befinden;
- einen ersten teleskopischen Rohrabschnitt (15.1), der mit einem unteren Endbereich relativ zu der genannten ersten Trägerplatte (14.1) innerhalb der genannten Hülse (11.1) befestigt ist und sich über einen wesentlichen Teil der Höhe der genannten Hülse erstreckt, wenn sich die genannten Rohrabschnitte (15.1, 15.2, 15.3) in der genannten ersten Betriebsanordnung befinden;
- wobei die genannte zweite Betätigungsschraube (13.2) eine Längsnut für eine Passfeder über zumindest einen Teil ihrer Länge aufweist; und
- zumindest zweite translatorische Platten-Trägermittel (16), die relativ zu der genannten zweiten Betätigungsschraube (13.2) oberhalb der genannten ersten Trägerplatte (14.1) beweglich vorgesehen sind und umfassen:
- eine zweite Trägerplatte (16.1), die innerhalb der genannten Hülse (11.1) angeordnet ist und in einer Durchgangsöffnung eine zweite Leitspindel (16.2) umfasst, die integral mit der genannten zweiten Trägerplatte (16.1) ausgebildet ist und über eine Schraubenkopplung mit der genannten zweiten Betätigungsschraube (13.2) in Eingriff steht;
- ein drittes Ritzel (16.3), das unterhalb der genannten zweiten Leitspindel (16.2) vorgesehen ist und rotationsfest sowie axial verschieblich relativ zu der genannten zweiten Betätigungsschraube (13.2) mittels Passfeder-Verbindungsmitteln vorgesehen ist, die in der Längsnut der genannten zweiten Betätigungsschraube (13.2) gleiten;
- eine dritte Welle (16.4), nachfolgend zweite angetriebene Welle genannt, die drehbar gelagert ist, seitlich relativ zu der genannten ersten angetriebenen Welle (14.4) angeordnet ist und eine zur Achse der genannten Antriebswelle (12) parallele Achse aufweist, in einer entsprechenden Durchgangsöffnung der genannten zweiten Trägerplatte (16.1), wobei:
- die genannte zweite angetriebene Welle (16.4) ein erstes axiales Ende (16.5) aufweist, das sich unterhalb der genannten zweiten Trägerplatte (16.1) erstreckt und starr mit einem vierten Ritzel (16.6) verbunden ist, das koaxial zu der genannten Welle angeordnet ist und mit dem genannten dritten Ritzel (16.3) kämmt, von dem es seine Drehbewegung erhält;
- einen zweiten teleskopischen Rohrabschnitt (15.2), der mit einem unteren Endbereich relativ zu der genannten zweiten Trägerplatte (16.1) innerhalb der genannten Hülse (11.1) befestigt ist und sich über einen wesentlichen Teil der Höhe der genannten Hülse (11.1) erstreckt, wenn sich die genannten Rohrabschnitte (15.1, 15.2, 15.3) in der genannten ersten Betriebsanordnung befinden.

2. Vorrichtung (10) nach Anspruch 1, **dadurch gekennzeichnet, dass** die genannte zweite angetriebene Welle (16.4) ein zweites axiales Ende (16.7) aufweist, das sich oberhalb der genannten zweiten Trägerplatte (16.1) erstreckt und starr mit einem Ende einer dritten koaxialen, außen mit Gewinde versehenen Betätigungsschraube (13.3) verbunden ist, die sich über einen wesentlichen Teil der genannten Hülse (11.1) erstreckt, wenn sich die genannten Rohrabschnitte (15.1, 15.2, 15.3) in der genannten ersten Betriebsanordnung befinden, und die eine Längsnut für eine Passfeder über zumindest einen Teil ihrer Länge aufweist;
und **dadurch gekennzeichnet, dass** dritte translatorische Platten-Trägermittel (18) vorgesehen sind, die relativ zu der genannten dritten Betätigungsschraube (13.3) oberhalb der genannten zweiten Trägerplatte (16.1) beweglich sind und umfassen:
- eine dritte Trägerplatte (18.1), die innerhalb der genannten Hülse (11.1) angeordnet ist und eine dritte Leitspindel (18.2) umfasst, die integral mit der genannten dritten Trägerplatte (18.1) ausgebildet ist und über eine Schraubenkopplung mit der genannten dritten Betätigungsschraube (13.3) in Eingriff steht;
- einen dritten teleskopischen Rohrabschnitt (15.3), der mit einem unteren Endbereich relativ zu der genannten dritten Trägerplatte (18.1) innerhalb der genannten Hülse (11.1) befestigt ist.

3. Vorrichtung (10) nach Anspruch 2, **dadurch gekennzeichnet, dass**:
- die genannte erste Betätigungsschraube (13.1) sich frei durch entsprechende Durchgangsöffnungen der genannten zweiten Trägerplatte (16.1) und der genannten dritten Trägerplatte (18.1) erstreckt, in denen jeweilige feste Führungs- und Zentrierbuchsen vorgesehen sind;
- die genannte zweite Betätigungsschraube (13.2) sich frei durch eine Durchgangsöffnung der genannten dritten Trägerplatte (18.1) erstreckt, in der eine entsprechende feste Führungs- und Zentrierbuchse vorgesehen ist;
**dadurch gekennzeichnet, dass** sie ein Sockelmittel (19) umfasst, das an seinem oberen Ende das genannte Lichtsignalmittel (L) trägt und oberhalb der genannten dritten translatorischen Platten-Trägermittel (18) befestigt ist,
und **dadurch gekennzeichnet, dass** das genannte Sockelmittel (19) umfasst:
- eine erste Platte (19.1), die oberhalb der genannten dritten Trägerplatte (18.1) befestigt ist und innerhalb der Gesamtabmessungen der genannten dritten Trägerplatte (18.1) liegt;
- eine zweite Platte (19.2), die fest oberhalb der genannten ersten Platte (19.1) mittels zweier erster geradliniger starrer Stäbe (19.3) getragen ist, die entlang der Richtung der Aus- und Einfahrbewegung der genannten teleskopischen Rohrabschnitte (15.1, 15.2, 15.3) ausgerichtet sind;
- drei Durchgangsöffnungen in der genannten ersten Platte (19.1), in denen jeweilige Führungs- und Zentrierbuchsen (19.11) befestigt sind, die jeweils einer der genannten drei Betätigungsschrauben (13.1, 13.2, 13.3) entsprechen, welche mittels der jeweiligen Buchse geführt und zentriert ist;
- drei Durchgangsöffnungen in der genannten zweiten Platte (19.2), in denen jeweilige Führungs- und Zentrierbuchsen (19.12) befestigt sind, die jeweils einer der genannten drei Betätigungsschrauben (13.1, 13.2, 13.3) entsprechen, welche mittels der jeweiligen Buchse geführt und zentriert ist;
- eine dritte Platte (19.4), die fest oberhalb der genannten zweiten Platte (19.2) mittels zweier zweiter geradliniger starrer Stäbe (19.5) getragen ist, die entlang der Richtung der Aus- und Einfahrbewegung der genannten teleskopischen Rohrabschnitte (15.1, 15.2, 15.3) ausgerichtet sind, wobei die genannte dritte Platte (19.4) das genannte Lichtsignalmittel (L) trägt.

4. Vorrichtung (10) nach einem oder mehreren der vorhergehenden Ansprüche, **dadurch gekennzeichnet, dass** die genannten drei Betätigungsschrauben (13.1, 13.2, 13.3) jeweilige Achsen aufweisen, die zueinander in einer Ebene versetzt sind, die orthogonal zur Achse der genannten Antriebswelle (12) ist.

5. Vorrichtung (10) nach einem oder mehreren der vorhergehenden Ansprüche, **dadurch gekennzeichnet, dass** die genannte erste Trägerplatte (14.1), die genannte zweite Trägerplatte (16.1) und die genannte Basisträgerplatte (11.2) starr mittels jeweiliger geradliniger Leisten (20.1, 20.2, 20.3) miteinander verbunden sind, die sich entlang der Richtung der Aus- und Einfahrbewegung der genannten teleskopischen Rohrabschnitte (15.1, 15.2, 15.3) erstrecken, und dass die genannten geradlinigen starren Leisten (20.1, 20.2, 20.3) in entsprechende geradlinige Nuten eingreifen, die jeweils an der inneren Fläche der genannten drei teleskopischen Rohrabschnitte (15.1, 15.2, 15.3) vorgesehen sind, mit der Funktion, zu verhindern, dass sich die genannten drei teleskopischen Rohrabschnitte (15.1, 15.2, 15.3) während der Aus- und Einfahrbewegung um ihre Achse drehen, wenn sie teleskopisch ausgefahren sind.

## Revendications

1. Dispositif de signalisation lumineuse (10) pour la proue d'un navire, comprenant un moyen de signalisation lumineuse (L) et une structure de support (11) dudit moyen de signalisation lumineuse (L), dans lequel:
- ladite structure (11) comprend un manchon tubulaire rigide fixe (11.1) et une pluralité de sections tubulaires (15.1, 15.2, 15.3), qui sont couplées de manière à coulisser télescopiquement les unes dans les autres et par rapport audit manchon (11.1),
de manière à adopter sélectivement une première configuration de fonctionnement présentant des dimensions globales minimales, dans laquelle lesdites sections tubulaires (15.1, 15.2, 15.3) sont rétractées télescopiquement à l'intérieur dudit manchon (11.1), et une seconde configuration de fonctionnement, dans laquelle lesdites sections tubulaires (15.1, 15.2, 15.3) sont étendues télescopiquement les unes par rapport aux autres et par rapport audit manchon (11.1) et le moyen de signalisation (L) est dans une condition de visibilité maximale par rapport à la proue du navire sur lequel le dispositif (10) est monté,
et dans lequel :
- ledit manchon (11.1) est solidaire d'une plaque de support de base interne stationnaire (11.2), qui est pourvue d'un trou traversant ;
- ladite plaque de support de base (11.2) supporte un premier arbre rotatif (12), ci-après dénommé arbre d'entraînement, dont l'axe est orienté selon la direction d'extension/rétraction télescopique desdites sections tubulaires (15.1, 15.2, 15.3) ;
- ledit arbre d'entraînement (12) présente une première extrémité axiale (12.1) s'étendant au-dessous de ladite plaque de support de base (11.2), à travers ledit trou traversant, connectée à une roue dentée, laquelle engrène avec un moyen de réduction, connecté à l'arbre de sortie de moyens moteur électriques (M) ;
- lesdits moyens moteur électriques (M) sont supportés au moyen de ladite plaque de support de base (11.2) et sont configurés pour tourner dans les deux sens de rotation ;
- ledit arbre d'entraînement (12) présente une seconde extrémité axiale (12.2) s'étendant au-dessus de ladite plaque de base (11.2) et rigidement connectée à une extrémité d'une première vis de manœuvre coaxiale extérieurement filetée (13.1), s'étendant sur une partie substantielle de ladite structure (11) ;
- ladite première vis de manœuvre (13.1) présente une rainure de clavette longitudinale s'étendant sur au moins une partie de sa longueur ;
le dispositif comprenant en outre
- des premiers moyens de support de plaque de translation (14) prévus mobiles par rapport à ladite première vis de manœuvre (13.1), au-dessus de ladite plaque de support de base (11.2), lesquels comprennent :
- une première plaque de support (14.1), disposée à l'intérieur dudit manchon (11.1) et qui comprend, dans un trou traversant, une première vis mère (14.2) solidaire de ladite première plaque (14.1) et engagée par couplage hélicoïdal par rapport à ladite première vis de manœuvre (13.1) ;
- un premier pignon (14.3) monté sur ladite première vis de manœuvre (13.1), au-dessous de ladite première vis mère (14.2), lequel est solidaire en rotation et coulissant axialement par rapport à ladite première vis de manœuvre (13.1), au moyen de moyens de liaison par clavette, prévus coulissant dans ladite rainure longitudinale de ladite première vis de manœuvre (13.1) ;
- un second arbre (14.4), ci-après dénommé premier arbre entraîné, monté rotatif, disposé latéralement et avec un axe parallèle par rapport à l'axe dudit arbre d'entraînement (12), dans un trou traversant correspondant de ladite première plaque de support (14.1), dans lequel ledit premier arbre entraîné (14.4) présente :
- une première extrémité axiale (14.5) s'étendant au-dessous de ladite première plaque de support (14.1) et rigidement connectée à un second pignon (14.6), coaxial audit arbre et engrenant avec ledit premier pignon (14.3), duquel il reçoit son mouvement de rotation ;
- une seconde extrémité axiale (14.7) s'étendant au-dessus de ladite première plaque de support (14.1) et rigidement connectée à une extrémité d'une seconde vis de manœuvre coaxiale extérieurement filetée (13.2), s'étendant sur une partie substantielle dudit manchon (11.1), lorsque lesdites sections tubulaires (15.1, 15.2, 15.3) sont dans ladite première configuration de fonctionnement ;
- une première section tubulaire télescopique (15.1), fixée avec une zone d'extrémité inférieure par rapport à ladite première plaque de support (14.1) à l'intérieur dudit manchon (11.1) et s'étendant sur une partie substantielle de la hauteur dudit manchon lorsque lesdites sections tubulaires (15.1, 15.2, 15.3) sont dans ladite première configuration de fonctionnement;
- ladite seconde vis de manœuvre (13.2) présentant une rainure de clavette longitudinale s'étendant sur au moins une partie de sa longueur; et
- au moins des seconds moyens de support de plaque de translation (16) prévus mobiles par rapport à ladite seconde vis de manœuvre (13.2), au-dessus de ladite première plaque de support (14.1), lesquels comprennent :
- une seconde plaque de support (16.1), disposée à l'intérieur dudit manchon (11.1) et qui comprend, dans un trou traversant, une seconde vis mère (16.2) solidaire de ladite seconde plaque (16.1) et engagée par couplage hélicoïdal par rapport à ladite seconde vis de manœuvre (13.2) ;
- un troisième pignon (16.3), disposé au-dessous de ladite seconde vis mère (16.2), solidaire en rotation et coulissant axialement par rapport à ladite seconde vis de manœuvre (13.2), au moyen de moyens de liaison par clavette, prévus coulissant dans ladite rainure longitudinale de ladite seconde vis de manœuvre (13.2) ;
- un troisième arbre (16.4), ci-après dénommé second arbre entraîné, monté rotatif, disposé latéralement par rapport audit premier arbre entraîné (14.4) et avec un axe parallèle par rapport à l'axe dudit arbre d'entraînement (12), dans un trou traversant correspondant de ladite seconde plaque de support (16.1), dans lequel :
- ledit second arbre entraîné (16.4) présente une première extrémité axiale (16.5) s'étendant au-dessous de ladite seconde plaque de support (16.1) et rigidement connectée à un quatrième pignon (16.6), coaxial audit arbre et engrenant avec ledit troisième pignon (16.3), duquel il reçoit son mouvement de rotation ;
- une seconde section tubulaire télescopique (15.2), fixée avec une zone d'extrémité inférieure par rapport à ladite seconde plaque de support (16.1) à l'intérieur dudit manchon (11.1) et s'étendant sur une partie substantielle de la hauteur dudit manchon (11.1), lorsque lesdites sections tubulaires (15.1, 15.2, 15.3) sont dans ladite première configuration de fonctionnement.

2. Dispositif (10) selon la revendication 1, **caractérisé en ce que** ledit second arbre entraîné (16.4) présente une seconde extrémité axiale (16.7) s'étendant au-dessus de ladite seconde plaque de support (16.1) et rigidement connectée à une extrémité d'une troisième vis de manœuvre coaxiale extérieurement filetée (13.3), s'étendant sur une partie substantielle dudit manchon (11.1), lorsque lesdites sections tubulaires (15.1, 15.2, 15.3) sont dans ladite première configuration de fonctionnement, et qui présente une rainure de clavette longitudinale s'étendant sur au moins une partie de sa longueur ;
et **en ce que** des troisièmes moyens de support de plaque de translation (18) sont prévus mobiles par rapport à ladite troisième vis de manœuvre (13.3), au-dessus de ladite seconde plaque de support (16.1), et comprennent:
- une troisième plaque de support (18.1), disposée à l'intérieur dudit manchon (11.1) et qui comprend une troisième vis mère (18.2) solidaire de ladite troisième plaque (18.1) et engagée par couplage hélicoïdal par rapport à ladite troisième vis de manœuvre (13.3) ;
- une troisième section tubulaire télescopique (15.3), fixée avec une zone d'extrémité inférieure par rapport à ladite troisième plaque de support (18.1) à l'intérieur dudit manchon (11.1).

3. Dispositif (10) selon la revendication 2, **caractérisé en ce que** :
- ladite première vis de manœuvre (13.1) s'étend librement à travers des trous traversants respectifs de ladite seconde plaque de support (16.1) et de ladite troisième plaque de support (18.1), dans lesquels sont prévus des paliers de guidage et de centrage fixes respectifs ;
- ladite seconde vis de manœuvre (13.2) s'étend librement à travers un trou traversant de ladite troisième plaque de support (18.1), dans lequel est prévu un palier de guidage et de centrage fixe correspondant ;
- **en ce qu'**il comprend un moyen de piédestal (19) qui supporte audit sommet ledit moyen de signalisation lumineuse (L) et est fixé au-dessus desdits troisièmes moyens de support de plaque de translation (18),
- et **en ce que** ledit moyen de piédestal (19) comprend :
- une première plaque (19.1), fixée au-dessus de ladite troisième plaque de support (18.1) et contenue dans les dimensions globales de ladite troisième plaque (18.1) ;
- une seconde plaque (19.2), supportée fixement au-dessus de ladite première plaque (19.1) au moyen de deux premières tiges rigides rectilignes (19.3), alignées selon la direction d'extension et de rétraction desdites sections tubulaires télescopiques (15.1, 15.2, 15.3) ;
- trois trous traversants prévus dans ladite première plaque (19.1), dans lesquels sont fixés des paliers de guidage et de centrage respectifs (19.11), chacun correspondant à l'une desdites trois vis de manœuvre (13.1, 13.2, 13.3), laquelle est guidée et centrée au moyen dudit palier ;
- trois trous traversants prévus dans ladite seconde plaque (19.2), dans lesquels sont fixés des paliers de guidage et de centrage respectifs (19.12), chacun correspondant à l'une desdites trois vis de manœuvre (13.1, 13.2, 13.3), laquelle est guidée et centrée au moyen dudit palier ;
- une troisième plaque (19.4), supportée fixement au-dessus de ladite seconde plaque (19.2) au moyen de deux secondes tiges rigides rectilignes (19.5), alignées selon la direction d'extension et de rétraction desdites sections tubulaires télescopiques (15.1, 15.2, 15.3), ladite troisième plaque (19.4) supportant ledit moyen de signalisation lumineuse (L).

4. Dispositif (10) selon l'une ou plusieurs des revendications précédentes, **caractérisé en ce que** lesdites trois vis de manœuvre (13.1, 13.2, 13.3) présentent des axes respectifs décalés les uns par rapport aux autres dans un plan orthogonal à l'axe dudit arbre d'entraînement (12).

5. Dispositif (10) selon l'une ou plusieurs des revendications précédentes, **caractérisé en ce que** ladite première plaque de support (14.1), ladite seconde plaque de support (16.1) et ladite plaque de support de base (11.2) sont rigidement connectées au moyen de lattes rectilignes respectives (20.1, 20.2, 20.3), s'étendant selon la direction d'extension et de rétraction desdites sections tubulaires télescopiques (15.1, 15.2, 15.3), et **en ce que** lesdites lattes rigides rectilignes (20.1, 20.2, 20.3) sont engagées dans des rainures rectilignes correspondantes, prévues respectivement sur la face interne desdites trois sections tubulaires télescopiques (15.1, 15.2, 15.3), avec la fonction d'empêcher lesdites trois sections tubulaires télescopiques (15.1, 15.2, 15.3) de tourner autour de leur axe lors de l'extension et de la rétraction, lorsqu'elles sont étendues télescopiquement.
